# EUROPÄISCHE PATENTSCHRIFT

(11) **EP 3 769 600 B1**
(45) Veröffentlichungstag und Bekanntmachung des Hinweises auf die Patenterteilung: **15.03.2023**
(21) Anmeldenummer: 20169628.3
(22) Anmeldetag: 15.04.2020
(51) Int. Cl.: A01B 76/00

(54) **LANDWIRTSCHAFTLICHE ARBEITSMASCHINE**
AGRICULTURAL MACHINE
ENGIN DE TRAVAIL AGRICOLE

(30) Priorität: 22.07.2019 DE 102019119777
(43) Veröffentlichungstag der Anmeldung: 27.01.2021
(73) Patentinhaber: CLAAS E-Systems GmbH, 49201 Dissen (DE)
(72) Erfinder: Reinecke, Max, 33775 Versmold (DE); Losch, Michael, 33775 Versmold (DE); Höke, Oliver, 49090 Osnabrück (DE)
(74) Vertreter: CLAAS Gruppe

(56) Entgegenhaltungen:
- EP-A1- 3 064 050
- EP-A1- 3 111 738
- WO-A1-2019/035427
- DE-A1- 10 217 398
- DE-A1-102004 032 642

## Beschreibung

Die Erfindung betrifft eine landwirtschaftliche Arbeitsmaschine gemäß dem Oberbegriff von Anspruch 1.

Der bekannte Stand der Technik (DE 10 2004 032 642 A1), von dem die Erfindung ausgeht, betrifft eine landwirtschaftliche Arbeitsmaschine gemäß dem Oberbegriff von Anspruch 1.

Bei der in Rede stehenden landwirtschaftlichen Arbeitsmaschine kann es sich um jedwede landwirtschaftliche Arbeitsmaschine handeln, die der Abarbeitung eines landwirtschaftlichen Arbeitsauftrags, beispielsweise einem Bodenbearbeitungs- oder Ernteprozess, dient. Dazu gehören beispielsweise Zugmaschinen, insbesondere Traktoren, aber auch selbstfahrende Erntemaschinen wie Mähdrescher, Feldhäcksler oder dergleichen.

Diese weisen ein oder mehrere Arbeitsorgane zur Durchführung oder Unterstützung landwirtschaftlicher Arbeit auf. Bei einer Erntemaschine zählen dazu beispielsweise die Einzugseinrichtung, das Dresch- oder Häckselwerk, die Überladeeinrichtung, aber auch der Fahrantrieb und die Lenkeinrichtung. Eine landwirtschaftliche Arbeitsmaschine kann auch mit Arbeitsorganen in Form von Anbaugeräten, die an das Trägerfahrzeug angebaut sind, ausgestattet sein. Bei einer Erntemaschine zählen dazu beispielsweise Vorsatzgeräte wie Schneid- oder Mähwerke, Maisgebisse oder dergleichen. Bei einer Zugmaschine kann als Anbaugerät beispielsweise ein Mähwerk, ein Wender, ein Schwader, eine Ballenpresse oder ein Bodenbearbeitungsgerät wie ein Pflug, ein Grubber, eine Egge oder dergleichen vorgesehen sein.

Im Rahmen der zunehmenden Automatisierung landwirtschaftlicher Arbeitsmaschinen werden diese inzwischen regelmäßig mit einem Fahrerassistenzsystem ausgestattet, um den Bediener beim Fahren und bei der Verrichtung landwirtschaftlicher Arbeit zu unterstützen. Insbesondere können die Arbeitsorgane der landwirtschaftlichen Arbeitsmaschine auf diese Weise überwacht und gesteuert werden.

Bei dem zuvor genannten Stand der Technik ist eine Benutzerschnittstelle mit mehreren Bedientasten vorgesehen, wobei über die Bedientasten verschiedene Aktionen der landwirtschaftlichen Arbeitsmaschine ausführbar sind.

Über ein Spracherkennungssystem ist es ferner auch möglich, Aktionen auszuführen, die für einen Wendevorgang am Feldende notwendig sind. Eine solche Aktion umfasst beispielsweise die Steuerung eines Pflugs, um diesen am Feldende auszuheben. Da die datentechnische Verarbeitung eines entsprechenden, vom Bediener gegebenen Sprachbefehls einige Zeit in Anspruch nimmt, ist es dabei eine Herausforderung für den Bediener, den jeweiligen Sprachbefehl rechtzeitig zu geben, damit die Aktion, beispielsweise das Ausheben des Pflugs, auch rechtzeitig vor dem Feldende ausgeführt wird.

Der Erfindung liegt das Problem zugrunde, die bekannte landwirtschaftliche Arbeitsmaschine derart auszugestalten und weiterzubilden, dass diese hinsichtlich der genannten Herausforderung weiter optimiert wird.

Das obige Problem wird durch die Merkmale des kennzeichnenden Teils von Anspruch 1 gelöst.

Die wesentliche Überlegung ist, den Sprachbefehl unabhängig, also zeitlich entkoppelt, von dem Zeitpunkt, zu dem dieser die Aktion auslösen soll, zu geben und die entsprechenden Daten, insbesondere in durch die Rechenvorrichtung des Fahrerassistenzsystems datentechnisch verarbeiteter Form, im Speicher des Fahrerassistenzsystems zu hinterlegen. Die hinterlegten Daten umfassen dabei Anweisungen, insbesondere Parameter und/oder Parametersätze, zum Ausführen einer Aktion, die eine Steuerung- und/oder Regelung eines oder mehrerer Arbeitsorgane umfasst. Hierbei können mehreren Bedienelemente unterschiedliche Aktionen zugeordnet werden. Sobald dann eine entsprechende Aktion ausgeführt werden soll, braucht der Bediener nur das Bedienelement betätigen. Vorzugsweise wird dann die Aktion unmittelbar ausgeführt. Insbesondere kommt es nicht zu einer zeitlichen Verzögerung durch eine noch durchzuführende datentechnische Verarbeitung des Sprachbefehls, da dieser bereits vor dem Auslösen der Aktion, nämlich vor dem Betätigen des jeweiligen Bedienelementes, datentechnisch verarbeitet wurde. Um die jeweilige Aktion mit dem zugeordneten Bedienelement zu verknüpfen, kann der Bediener, insbesondere der Fahrer, der landwirtschaftlichen Arbeitsmaschine den Sprachbefehl jederzeit vor und/oder während der Ausführung des landwirtschaftlichen Arbeitsauftrags, der die Aktion erfordert, geben. Der Bediener muss sich somit unmittelbar vor der auszuführenden Aktion nur auf die rechtzeitige Betätigung des Bedienelementes konzentrieren.

Das Bedienelement kann dabei eine Bedientaste, eine berührungsempfindliche Fläche, ein Joystick oder ein Drehknopf sein.

Im Einzelnen wird vorgeschlagen, dass die über das jeweilige Bedienelement auszulösende Aktion mittels eines Sprachbefehls festlegbar ist.

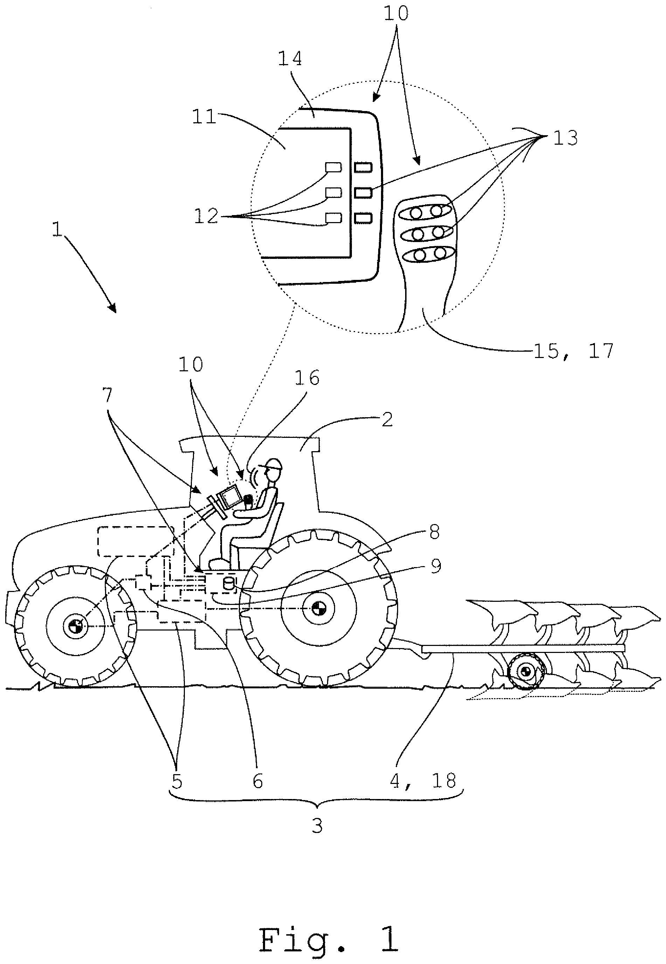

Im Folgenden wird die Erfindung anhand einer lediglich Ausführungsbeispiele darstellenden Zeichnung näher erläutert. In der Zeichnung zeigt
- Fig. 1: eine schematische Seitenansicht einer landwirtschaftlichen Arbeitsmaschine.

Die in der Zeichnung dargestellte landwirtschaftliche Arbeitsmaschine 1 dient der Abarbeitung eines landwirtschaftlichen Arbeitsauftrags. Hier und vorzugsweise handelt es sich bei der Arbeitsmaschine 1 um einen Traktor 2, welcher beispielsweise als Zugmaschine eingesetzt wird. Die vorschlagsgemäße Lösung ist auch auf alle anderen, im einleitenden Teil genannten landwirtschaftlichen Arbeitsmaschinen, insbesondere auf selbstfahrende Erntemaschinen, anwendbar. Alle folgenden Ausführungen betreffen fast durchweg eine als Traktor 2 ausgestaltete Arbeitsmaschine 1. Diese Ausführungen gelten für alle anderen Arten von landwirtschaftlichen Arbeitsmaschinen entsprechend.

Die landwirtschaftliche Arbeitsmaschine 1 weist mindestens ein Arbeitsorgan 3 zur Durchführung oder Unterstützung landwirtschaftlicher Arbeit auf. Bei dem jeweiligen Arbeitsorgan 3 kann es sich um ein Anbaugerät 4, also ein an die landwirtschaftliche Arbeitsmaschine 1 im Übrigen, also das Trägerfahrzeug, anbaubares Arbeitsorgan, oder um ein Arbeitsorgan, das fester Bestandteil der landwirtschaftlichen Arbeitsmaschine 1 ist, handeln. Die landwirtschaftliche Arbeitsmaschine 1 weist dabei einen Fahrantrieb 5 und eine Lenkeinrichtung 6 auf, die hier ebenfalls den Arbeitsorganen 3 zugerechnet werden.

Ferner weist die landwirtschaftliche Arbeitsmaschine 1 ein Fahrerassistenzsystem 7 auf, das einen Speicher 8 zum Hinterlegen von Daten und eine Rechenvorrichtung 9 zur Verarbeitung der in dem Speicher 8 hinterlegten Daten umfasst.

Das Fahrerassistenzsystem 7 verfügt außerdem über eine Benutzerschnittstelle 10, insbesondere eine graphische Benutzerschnittstelle 10. Eine graphische Benutzerschnittstelle 10 weist üblicherweise ein Display 11 auf, das ggf. als Touch-Screen ausgebildet ist und virtuelle Bedientasten 12 bereitstellen kann. Weiter kann bzw. können als Bestandteil der Benutzerschnittstelle 10 ein oder mehrere Hardware-Bedientasten 13 vorgesehen sein. Letztere können am Displaygehäuse 14 und/oder an einem separaten Eingabegerät 15 wie einer Tastatur, einem Hebel, einem Griff oder dergleichen angeordnet sein.

Das Fahrerassistenzsystem 7 ist dafür eingerichtet, auf eine bedienerseitige Betätigung einer Bedientaste 12, 13 hin, insbesondere auf einen Tastendruck hin, eine der jeweiligen Bedientaste 12, 13 zugeordnete Aktion auszuführen. Die Aktion umfasst eine Steuerung und/oder Regelung eines oder mehrerer Arbeitsorgane 3 der landwirtschaftlichen Arbeitsmaschine 1 basierend auf im Speicher 8 hinterlegten Parametern und/oder Parametersätzen.

Das in den Figuren dargestellte und insoweit bevorzugte Ausführungsbeispiel betrifft eine landwirtschaftliche Arbeitsmaschine 1, insbesondere selbstfahrende Erntemaschine oder Zugmaschine, mit mindestens einem Arbeitsorgan 3 zur Durchführung oder Unterstützung landwirtschaftlicher Arbeit, wobei ein Fahrerassistenzsystem 7 vorgesehen ist, das einen Speicher 8 zum Hinterlegen von Daten, eine Rechenvorrichtung 9 zur Verarbeitung der in dem Speicher 8 hinterlegten Daten und eine Benutzerschnittstelle 10, die mindestens eine Bedientaste 12, 13 bereitstellt, aufweist, wobei das Fahrerassistenzsystem 7 dafür eingerichtet ist, auf eine bedienerseitige Betätigung mindestens einer Bedientaste 12, 13 der Benutzerschnittstelle 10 hin eine der jeweiligen Bedientaste 12, 13 zugeordnete Aktion auszuführen, die eine Steuerung und/oder Regelung eines oder mehrerer Arbeitsorgane 3 der landwirtschaftlichen Arbeitsmaschine 1 umfasst.

Der Begriff "Bedientaste" umfasst hier sowohl Hardware-Bedientasten 13 als auch virtuelle Bedientasten 12, das heißt auf einem Touchscreen angezeigte und betätigbare Bedientasten. Die Bedientasten 12, 13 können dabei Drucktasten, Kippschaltern, Schieber oder dergleichen sein. Insoweit ist der Begriff "Bedientaste" weit zu verstehen. Anstelle von virtuellen Bedientasten 12 und Hardware-Bedientasten 13 sind auch andere Bedienelemente wie eine berührungsempfindliche Fläche, ein Joystick oder ein Drehknopf möglich.

Wesentlich ist nun, dass die über die jeweilige Bedientaste 12, 13 auszulösende Aktion mittels eines Sprachbefehls 16 festlegbar ist.

Die über die Bedientaste 12, 13 auszulösende Aktion mittels eines Sprachbefehls 16 festzulegen bedeutet, dass durch den Sprachbefehl 16 eine auszulösende Aktion mit der jeweiligen Bedientaste 12, 13 verknüpft wird. Es können grundsätzlich unterschiedliche Aktionen, insbesondere mit ein und derselben Bedientaste 12, 13, ggf. auch mit einer oder mehreren weiteren solcher Bedientasten 12, 13, verknüpft und ausgeführt werden.

Zwei beispielhafte Dialoge, um eine über eine Bedientaste 12, 13 auszulösende Aktion mittels eines Sprachbefehls 16 festzulegen, sind im Folgenden wiedergegeben:
Bediener: "Hallo Bedientaste 1 - setze Funktion Schneidwerk hoch" System: "OK"
Bediener: "Hallo Bedientaste 2 - setze Funktion Schneidwerk runter" System: "OK"

Bei dem in den Figuren dargestellten und insoweit bevorzugten Ausführungsbeispiel ist ferner vorgesehen, dass die über die jeweilige Bedientaste 12, 13 auszulösende Aktion mit der Bedientaste 12, 13 temporär verknüpft wird, vorzugsweise, dass die auszulösende Aktion mit der Bedientaste 12, 13 solange verknüpft bleibt, bis mittels eines Sprachbefehls 16 eine andere auszulösende Aktion mit der Bedientaste 12, 13 verknüpft wird. Auch ist eine bedienerseitige Abfrage der Belegung einer Bedientaste 12, 13 über einen Sprachbefehl denkbar.

Ein beispielhafter Dialog, um eine Belegung einer Bedientaste 12, 13 bedienerseitig über einen Sprachbefehl abzufragen, ist im Folgenden wiedergegeben:
Bediener: "Hallo Bedientaste 1 - welche Funktion" System: "Schneidwerk hoch"

Weiter ist hier und vorzugsweise vorgesehen, dass die über die jeweilige Bedientaste 12, 13 auszulösende Aktion auf die bedienerseitige Betätigung hin in Echtzeit ausgelöst wird.

Der Begriff "Echtzeit" ist in diesem Zusammenhang weit zu verstehen und bedeutet, dass das Auslösen der Aktion in einem vorgegebenen Zeitraum ab dem Betätigen der Bedientaste 12, 13 erfolgt, der höchstens wenige Minuten, z.B. höchstens eine Minute, bevorzugt höchstens wenige Sekunden, z.B. höchstens 30 Sekunden, besonders bevorzugt höchstens wenige Bruchteile von Sekunden, z.B. höchstens eine halbe Sekunde, beträgt.

Zwei Beispiele, um eine zuvor mittels Sprachbefehl festgelegte Aktion auf eine bedienerseitige Betätigung hin auszulösen, sind im Folgenden wiedergegeben:
Bediener drückt Bedientaste 1
System fährt Schneidwerk hoch
Bediener drückt Bedientaste 2
System fährt Schneidwerk runter

Weiter ist hier und vorzugsweise vorgesehen, dass die jeweilige Bedientaste 12, 13 an einem Multifunktionsgriff 17 der Benutzerschnittstelle 10 angeordnet ist.

Ein "Multifunktionsgriff" ist ein von dem Display 11 bzw. Displaygehäuse 14 separates Eingabegerät 15 zur Ausführung von mindestens zwei verschiedenen Funktionen, das ebenfalls Bestandteil der Benutzerschnittstelle 10 ist.

Weiter ist hier und vorzugsweise vorgesehen, dass die über die jeweilige Bedientaste 12, 13 auszulösende Aktion ein Ansteuern mindestens eines Arbeitsorgans 3, insbesondere einer Einzugseinrichtung, eines Dresch- oder Häckselwerks, einer Überladeeinrichtung, eines Fahrantriebs und/oder einer Lenkeinrichtung (bspw. Start/Stopp A-B-Linien-Aufzeichnen), und/oder mindestens eines Anbaugeräts 4, insbesondere eines Schneid- oder Mähwerks, eines Maisgebisses, eines Wenders, eines Schwaders, einer Ballenpresse und/oder eines Bodenbearbeitungsgeräts wie eines Pflugs, eines Grubbers und/oder einer Egge, der landwirtschaftlichen Arbeitsmaschine 1 umfasst, vorzugsweise, dass die über die jeweilige Bedientaste 12, 13 auszulösende Aktion ein Ausheben eines Pflugs 18 ist.

### Bezugszeichenliste

- 1: Landwirtschaftliche Arbeitsmaschine
- 2: Traktor
- 3: Arbeitsorgan
- 4: Anbaugerät
- 5: Fahrantrieb
- 6: Lenkeinrichtung
- 7: Fahrerassistenzsystem
- 8: Speicher
- 9: Rechenvorrichtung
- 10: Benutzerschnittstelle
- 11: Display
- 12: Bedientasten
- 13: Hardware-Bedientasten
- 14: Displaygehäuse
- 15: Eingabegerät
- 16: Sprachbefehl
- 17: Multifunktionsgriff
- 18: Pflug

## Patentansprüche

1. Landwirtschaftliche Arbeitsmaschine, insbesondere selbstfahrende Erntemaschine oder Zugmaschine, mit mindestens einem Arbeitsorgan (3) zur Durchführung oder Unterstützung landwirtschaftlicher Arbeit,
wobei ein Fahrerassistenzsystem (7) vorgesehen ist, das einen Speicher (8) zum Hinterlegen von Daten, eine Rechenvorrichtung (9) zur Verarbeitung der in dem Speicher (8) hinterlegten Daten und eine Benutzerschnittstelle (10), die mindestens ein Bedienelement (12, 13) bereitstellt, aufweist,
wobei das Fahrerassistenzsystem (7) dafür eingerichtet ist, auf eine bedienerseitige Betätigung des Bedienelementes (12, 13) der Benutzerschnittstelle (10) hin eine dem jeweiligen Bedienelement (12, 13) zugeordnete Aktion auszuführen, die eine Steuerung und/oder Regelung eines oder mehrerer Arbeitsorgane (3) der landwirtschaftlichen Arbeitsmaschine (1) umfasst,
**dadurch gekennzeichnet,**
**dass** die durch die Betätigung des jeweiligen Bedienelements (12, 13) auszulösende Aktion mittels eines Sprachbefehls (16) festlegbar ist, wobei zur Verknüpfung der jeweiligen auszulösenden Aktion mit dem zugeordneten Bedienelement (12, 13) der Bediener der landwirtschaftlichen Arbeitsmaschine (1) den Sprachbefehl (16) jederzeit vor und/oder während der Ausführung eines landwirtschaftlichen Arbeitsauftrags, der die Aktion erfordert, gibt.

2. Landwirtschaftliche Arbeitsmaschine nach Anspruch 1, **dadurch gekennzeichnet, dass** das Bedienelement eine Bedientaste, eine berührungsempfindliche Fläche, ein Joystick oder ein Drehknopf ist.

3. Landwirtschaftliche Arbeitsmaschine nach Anspruch 1 oder 2, **dadurch gekennzeichnet, dass** die Benutzerschnittstelle eine Vielzahl von Bedienelementen aufweist und für eine Mehrzahl der Bedienelemente die über das jeweilige Bedienelement (12, 13) auszulösende Aktion mittels eines einzigen Sprachbefehls (16) festlegbar ist

4. Landwirtschaftliche Arbeitsmaschine nach einem der vorhergehenden Ansprüche, **dadurch gekennzeichnet, dass** die über das jeweilige Bedienelement (12, 13) auszulösende Aktion mit dem Bedienelement (12, 13) temporär verknüpft wird, vorzugsweise, dass die auszulösende Aktion mit dem Bedienelement (12, 13) solange verknüpft bleibt, bis mittels eines Sprachbefehls (16) eine andere auszulösende Aktion mit dem Bedienelement (12, 13) verknüpft wird.

5. Landwirtschaftliche Arbeitsmaschine nach einem der vorhergehenden Ansprüche, **dadurch gekennzeichnet, dass** die über das jeweilige Bedienelement (12, 13) auszulösende Aktion auf die bedienerseitige Betätigung hin in Echtzeit ausgelöst wird.

6. Landwirtschaftliche Arbeitsmaschine nach einem der vorhergehenden Ansprüche, **dadurch gekennzeichnet, dass** das jeweilige Bedienelement (12, 13) an einem Multifunktionsgriff der Benutzerschnittstelle (10) angeordnet ist.

7. Landwirtschaftliche Arbeitsmaschine nach einem der vorhergehenden Ansprüche, **dadurch gekennzeichnet, dass** die über das jeweilige Bedienelement (12, 13) auszulösende Aktion ein Ansteuern eines Arbeitsorgans (3), insbesondere einer Einzugseinrichtung, eines Dresch- oder Häckselwerks, einer Überladeeinrichtung, eines Fahrantriebs und/oder einer Lenkeinrichtung, und/oder mindestens eines Anbaugeräts (4), insbesondere eines Schneid- oder Mähwerks, eines Maisgebisses, eines Wenders, eines Schwaders, einer Ballenpresse und/oder eines Bodenbearbeitungsgeräts, insbesondere eines Pflugs, eines Grubbers und/oder einer Egge, der landwirtschaftlichen Arbeitsmaschine (1) umfasst, vorzugsweise, dass die über das jeweilige Bedienelement (12, 13) auszulösende Aktion ein Ausheben eines Pflugs ist.

## Claims

1. An agricultural working machine, in particular a self-propelled harvesting machine or towing vehicle, with at least one working unit (3) for carrying out or supporting agricultural work,
wherein a driver assistance system (7) is provided which has a memory (8) for storing data, a processing device (9) for processing the data stored in the memory (8) and a user interface (10) which provides at least one operator element (12, 13),
wherein the driver assistance system (7) is configured to carry out an action associated with the respective operator element (12, 13) and which comprises control and/or regulation of one or more working units (3) of the agricultural working machine (1) when the operator activates the operator element (12, 13) from the user interface (10),
**characterized in that**
the action to be initiated by the activation of the respective operator element (12, 13) can be specified by means of a spoken command (16), wherein, in order to link the respective action to be initiated with the associated operator element (12, 13), the operator of the agricultural working machine (1) gives the spoken command (16) at any time before and/or while carrying out an agricultural working assignment which the action requires.

2. The agricultural working machine according to claim 1, **characterized in that** the operator element is an operating button, a touch sensitive surface, a joystick or a rotary knob.

3. The agricultural working machine according to claim 1 or claim 2, **characterized in that** the user interface has a plurality of operator elements and the action to be initiated by means of a single spoken command (16) via the respective operator element (12, 13) can be specified for a majority of the operator elements.

4. The agricultural working machine according to one of the preceding claims, **characterized in that** the action to be initiated via the respective operator element (12, 13) is temporarily linked to the operator element (12, 13), preferably **in that** the action to be initiated remains linked to the operator element (12, 13) until another action to be initiated by means of a spoken command (16) is linked to the operator element (12, 13).

5. The agricultural working machine according to one of the preceding claims, **characterized in that** the action to be initiated via the respective operator element (12, 13) is initiated in real time by the activation by the operator.

6. The agricultural working machine according to one of the preceding claims, **characterized in that** the respective operator element (12, 13) is disposed on a multi-functional handle of the user interface (10).

7. The agricultural working machine according to one of the preceding claims, **characterized in that** the action to be initiated via the respective operator element (12, 13) is a control of a working unit (3), in particular a feeder unit, a threshing assembly or chopping assembly, an overhead transfer unit, a propulsion unit and/or a steering unit, and/or at least one mounted implement (4), in particular a cutting assembly or mowing assembly, a corn header, a tedder, a hay rake, a baler and/or a soil working implement, in particular a plough, a cultivator and/or a harrow, of the agricultural working machine (1), preferably **in that** the action to be initiated via the respective operator element (12, 13) is lifting of a plough.

## Revendications

1. Machine de travail agricole, en particulier machine de récolte automotrice ou machine de traction, comprenant au moins un organe de travail (3) pour réaliser ou assister un travail agricole,
un système d'assistance à la conduite (7) étant prévu, lequel comporte une mémoire (8) pour enregistrer des données, un dispositif de calcul (9) pour traiter des données enregistrées dans la mémoire (8) et une interface utilisateur (10) qui fournit au moins un élément d'utilisation (12, 13),
le système d'assistance à la conduite (7) étant agencé pour exécuter, à la suite d'un actionnement côté utilisateur de l'élément d'utilisation (12, 13) de l'interface utilisateur (10), une action qui est associée à l'élément d'utilisation respectif (12, 13) et qui comprend une commande et/ou une régulation d'un ou plusieurs organes de travail (3) de la machine de travail agricole (1),
**caractérisée en ce que**
l'action à déclencher par l'intermédiaire de l'actionnement de l'élément d'utilisation respectif (12, 13) est définissable au moyen d'une instruction vocale (16), pour lier l'action respective à déclencher à l'élément d'utilisation associé (12, 13) l'utilisateur de la machine de travail agricole (1) donnant l'instruction vocale (16) à tout moment avant et/ou pendant l'exécution d'une tâche agricole qui nécessite l'action.

2. Machine de travail agricole selon la revendication 1, **caractérisée en ce que** l'élément d'utilisation est une touche d'actionnement, une surface tactile, un joystick ou un bouton rotatif.

3. Machine de travail agricole selon la revendication 1 ou 2, **caractérisée en ce que** l'interface utilisateur comporte une pluralité d'éléments d'utilisation et, pour une majorité des éléments d'utilisation, l'action à déclencher par l'intermédiaire de l'élément d'utilisation respectif (12, 13) est définissable au moyen d'une instruction vocale unique (16).

4. Machine de travail agricole selon une des revendications précédentes, **caractérisée en ce que** l'action à déclencher par l'intermédiaire de l'élément d'utilisation respectif (12, 13) est liée temporairement à l'élément d'utilisation (12, 13), de préférence **en ce que** l'action à déclencher reste liée à l'élément d'utilisation (12, 13) jusqu'à ce qu'une autre action à déclencher soit liée à l'élément d'utilisation (12, 13) au moyen d'une instruction vocale (16).

5. Machine de travail agricole selon une des revendications précédentes, **caractérisée en ce que** l'action à déclencher par l'intermédiaire de l'élément d'utilisation respectif (12, 13) est déclenchée en temps réel à la suite de l'actionnement côté utilisateur.

6. Machine de travail agricole selon une des revendications précédentes, **caractérisée en ce que** l'élément d'utilisation respectif (12, 13) est disposé sur une poignée multifonction de l'interface utilisateur (10).

7. Machine de travail agricole selon une des revendications précédentes, **caractérisée en ce que** l'action à déclencher par l'intermédiaire de l'élément d'utilisation respectif (12, 13) comprend une commande d'un organe de travail (3), en particulier d'un équipement d'alimentation, d'un système de battage ou d'un système de hachage, d'un équipement de déchargement, d'un groupe propulseur et/ou d'un équipement directionnel, et/ou au moins d'un outil rapporté (4), en particulier d'un système de coupe ou de battage, d'un bec maïs, d'un faneur, d'un andaineur, d'une presse à balles et/ou d'un outil de travail du sol, en particulier d'une charrue, d'un cultivateur et/ou d'une herse, de la machine de travail agricole (1), de préférence **en ce que** l'action à déclencher par l'intermédiaire de l'élément d'utilisation respectif (12, 13) est un levage d'une charrue.
